# EUROPEAN PATENT SPECIFICATION

(11) **EP 1 886 977 B1**
(45) Date of publication and mention of the grant of the patent: **19.05.2010**
(21) Application number: 06425587.0
(22) Date of filing: 10.08.2006
(51) Int. Cl.: C03B 9/453

(54) **A pusher system for hollow glassware forming machines**
Abschiebevorrichtung für eine Glasformmaschine
Bras-poussoir pour une machine façonnant du verre

(43) Date of publication of application: 13.02.2008
(73) Proprietor: BDF HOLDING S.p.A., 36100 Vicenza (IT)
(72) Inventor: Sasso, Daniele, 36100 Vicenza (IT); Bellina, Claudio, 36030 Caldogno (Vicenza) (IT)
(74) Representative: Gallarotti, Franco

(56) References cited:
- EP-A- 1 627 859
- EP-A2- 1 571 130
- EP-A2- 1 577 272
- WO-A-2005/085145
- CZ-B6- 288 848

## Description

The present invention relates to a so-called "pusher" system for I.S. machines for forming hollow glassware, of the type including one or more pusher devices, which device or each device is capable of transferring one or more articles from a first position, on one side of a moving conveyor, to a second position, on said conveyor.

The so-called "pusher" handling devices are used on I.S. machines to transfer the finished articles - that at the exit of a finishing mould are positioned on a cooling plate (or "dead plate") - on a conveyor belt placed in front of the machine. I.S. machines usually comprise a number of forming sections, each equipped with at least one pusher device, and the conveyor belt collects the articles produced by all the sections. In this type of machines, precision and repeatability of the movement for transferring the articles from the cooling plate to the conveyor belt are very important, since each pusher device must deliver the produced articles from the respective section upon the belt, which travels at a relatively high speed (in the order of approximately 60-65 m/min) and must "insert" these articles between other articles already present on the belt (those arriving and those already passed over) with a space between one article and the next that may be as little as 20-30 mm.

From patent application CZ-A-288848 a pusher device for an I.S. machine is known, that comprises two electric motors, mounted on a support structure in such a way that their respective shafts are parallel. The shaft of the first motor is connected, through a first belt transmission, to a hollow shaft and the shaft of the second motor passes through the first hollow shaft. The hollow shaft supports a mechanical linkage of the parallelogram type comprising a supporting organ, at least two arms and a head to grip and handle the articles. Two rotating pins are hinged to the supporting organ and are interconnected, through a second belt transmission borne by the organ itself, to the shaft of the second motor. Each pins supports a respective arm, which is articulated at its distal end to the gripping and handling head.

In the device described in CZ-A-288848 the structure of the mechanical linkage that produces the displacements of the gripping head has low overall rigidity and it is affected by operative play, due to the presence of the transmission system for the pins on the supporting organ: this is the source of vibration, both when performing the movement and at the end of it, with possible positioning errors, over-extension and consequent collisions. These drawbacks are increased by the considerable mass in movement driven by the first motor during the transfer rotation. The presence of a mechanical transmission system on the supporting organ causes a further inertial load, which acts to the disadvantage of the dynamic performance of the mechanical linkage.

The general aim of the present invention is to produce a pusher device that is free of the drawbacks discussed above.

This and further aims, which will become clearer below, are achieved according to the invention by a system having the features of the attached claim 1. Preferred features of the invention are indicated in the sub-claims. The claims are an integral part of the technical teaching herein provided in regard to the invention.

The features and advantages of the invention will result from the following description with reference to the enclosed drawings, which are given as not limitative example, wherein:
- figure 1 is a schematic plan view of a pusher device according to the invention, operative between a cooling plate of an I.S. machine and a conveyor belt;
- figures 2 and 3 are perspective views, from different angles, of the pusher device of figure 1;
- figure 4 is a partial and schematic view of the principal components of a mechanical linkage of the pusher device of figures 1-3;
- figures 5, 6, 7 and 8 are partial and schematic sections according to lines V-V, VI-VI, VII-VII and VIII-VIII of figure 1, respectively (in these sections only those elements useful to understand the invention are shown);
- figures 9-16 are schematic plan views of successive positions taken by the pusher device according to the invention;
- figure 17 is a schematic representation of the principle of a possible variant embodiment of a mechanical linkage provided according to the invention.

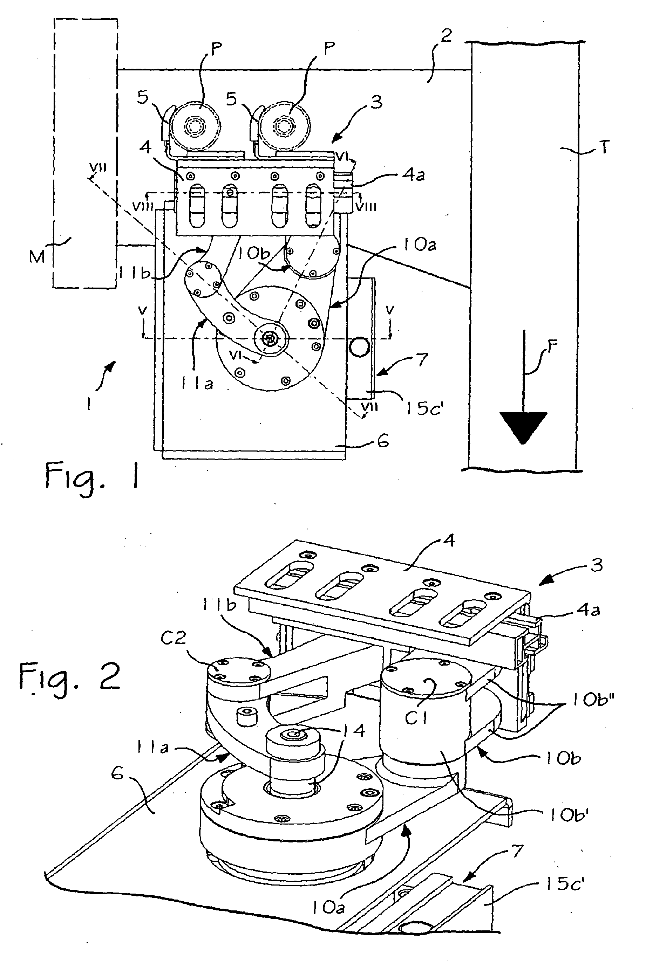

In figure 1, 1 indicates as a whole a handling or pusher device according to the invention. 2 indicates a cooling plate or dead plate, of a forming section of an I.S. machine, schematically represented by the block M. During operation of the machine M, one or more glass articles remain temporarily on the plate 2 in a position of cooling and waiting, at the exit of a respective finishing mould of the above said forming section. T indicates a conveyor belt, moving in the direction indicated by the arrow F, destined to receive the articles P that are displaced, by means of the pusher device 1, from the plate 2 to the conveyor belt T. For this purpose, the pusher device has a gripping and handling head, comprising a support frame 4 provided with gripping fingers 5.

The transfer movement of the articles P from the waiting position on the plate 2 to the arrival position on the belt T is imparted to the head 3 through a driving system - making the specific subject of the present invention - that comprises a mechanical linkage with articulated arms and two electric motors.

With reference also to figures 2-4, said mechanism includes a first and a second main arm, indicated with 10a and 11a, that are movable above a plate 6, beneath which a stationery structure of the device 1 extends, indicated with 7 as a whole.

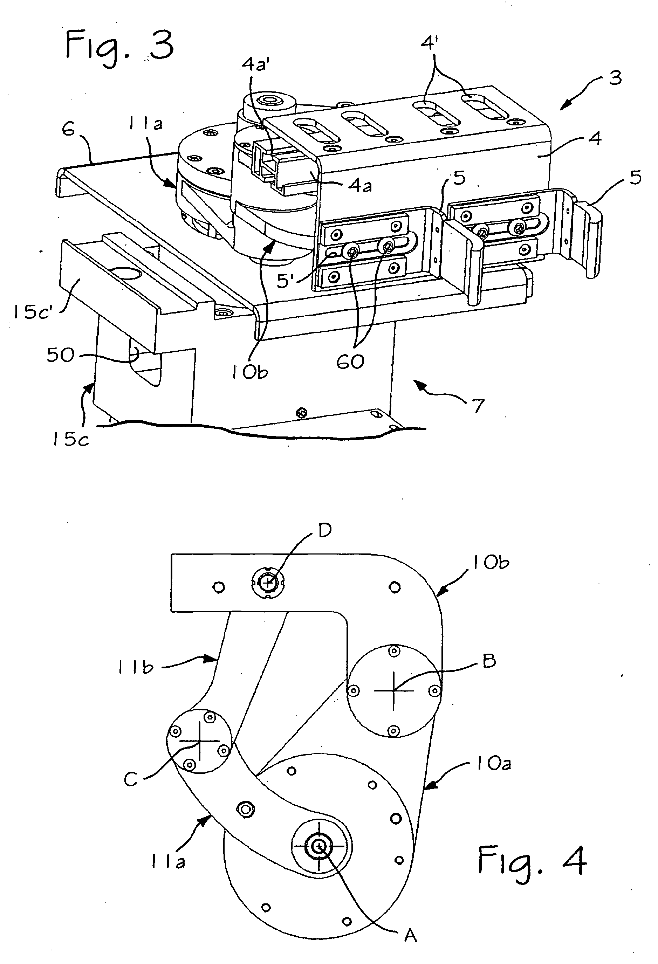

In the case illustrated, the arms 10a and 11a are rotatably mounted, at a respective first end, with respect to the plate 6 and to the structure 7, to rotate around a common fixed axis identified with A in figure 4, which axis is substantially orthogonal to the resting planes of the articles P, defined by the plate 2 and the conveyor belt T. Note that the figures represent the particular case in which the axes of rotation of the arms 10a and 11a coincide, with the two degrees of freedom of the mechanical linkage in correspondence with the axis identified with A: in alternative embodiments of the invention, however, the axes of rotation and thus the degrees of freedom of the mechanical linkage - essentially pentalateral - may be staggered and parallel.

The arm 10a is articulated, at its second end, with a movable structure 10b around an axis indicated with B, whereas the arm 11a is articulated, at its second end, with a third arm 11b, around an axis indicated with C. The arm 11b is also articulated, at its distal end, with the movable structure 10b around an axis indicated with D, parallel to the axes A-C.

In the example illustrated, the movable structure 10b is substantially elbow-shaped, with two portions orthogonal one to the other - or in any case transversal one to the other - of different lengths. Axis B is situated in the shorter portion, whereas axis D is situated in the longer portion. The movable structure 10b embodies a support for a section bar 4a, on which the frame 4 of the head 3 is mounted. From figure 2 it may be seen that the body of the movable structure 10b is mainly formed of a cylindrical portion 10b', from which two parallel plate-like portions 10b" extend, between which the ends of the arm 11b is inserted and articulated. The opposite end of the arm 11b is fork-shaped, for the purpose of articulating the arm 11a. The arm 10a has essentially cylindrical end parts, connected by a plate-shaped part.

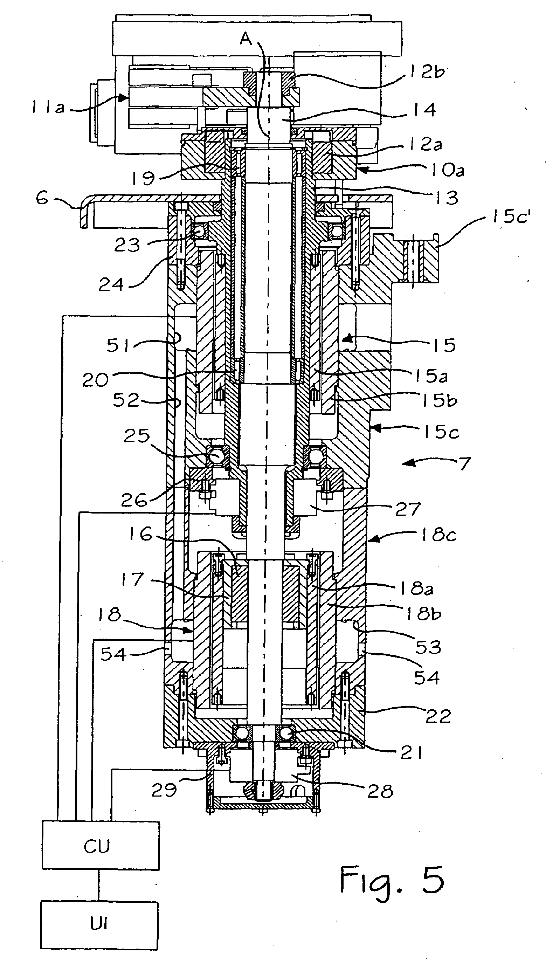

Figure 5 illustrates the system used to drive the main arms 10a and 11a, which preferably comprises two electric motors. At its first end the arm 10a is rigidly connected, through a keying organ 12a, to a first hollow shaft 13, i.e., tubular-shaped, inside which a second shaft 14 can rotate, the latter being restrained to the first end of the arm 11a, through a keying organ 12b. The ends of the shaft 13 project from the ends of the shaft 14. The tubular shaft 13 is rigidly connected, by keying or gluing, to the rotor 15a of a first electric motor 15, whose stator is indicated with 15b. The second shaft 14 is instead rigidly connected, through a respective keying organ 16, to a bush 17, which is in turn keyed or glued to the rotor 18a of a second electric motor 18, whose stator is indicated with 18b.

The stators 15b and 18b are mounted in respective casings 15c and 18c, which made as a whole at least a part of the structure 7 and that are arranged one above the other according to the axial direction of the shafts 13 and 14. The lower part of the casing 18c is fixed to the casing 15c, the latter having a flange-like portion 15c' for anchorage to the fixed framework of the belt T of figure 1, not shown.

In the example, the shaft 14 is supported by three bearings, two of which - indicated with 19 and 20 have their respective outer rings constrained to the tubular shaft 13; the third bearing - indicated with 21 - has its respective outer ring constrained to a lower cover 22 of the casing 18c. The tubular shaft 13 is instead supported by only two bearings, the first of which - indicated with 23 - has the respective outer ring constrained to an upper cover 24 of the casing 15c; the second bearing, indicated with 25, has the respective outer ring constrained through a flange 26 inside the casing 15c. This flange 26 supports a first position sensor or transducer 27, used to control the motion of the tubular shaft 13, and thus the motion and the position of the first arm 10a. A second sensor or transducer, indicated with 28, to control the motion of the second shaft 14, and thus the motion and the position of the second arm 11a, is instead mounted on the lower cover 22, through a respective flange 29.

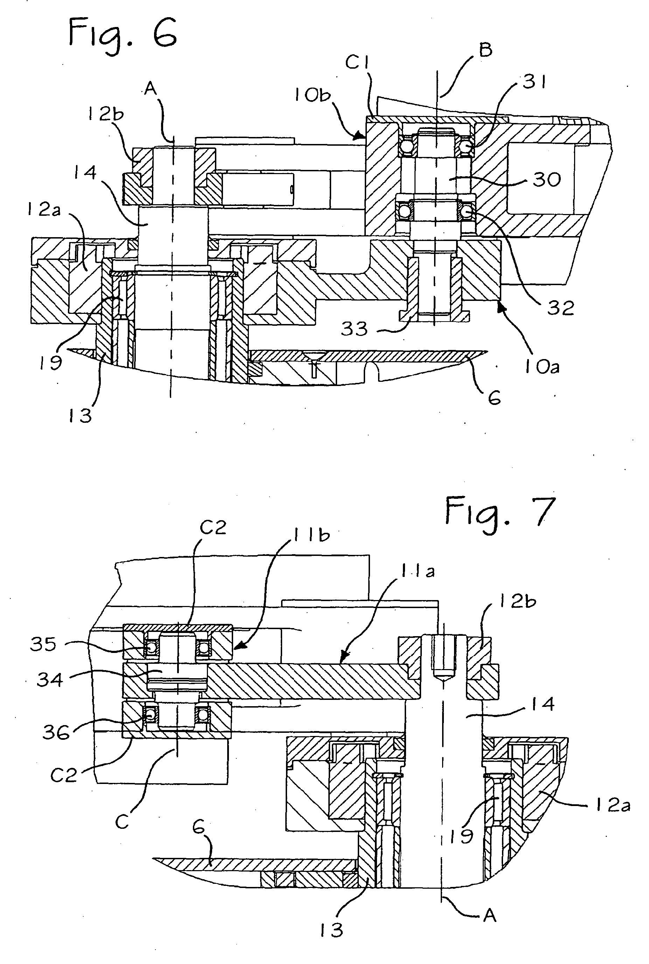

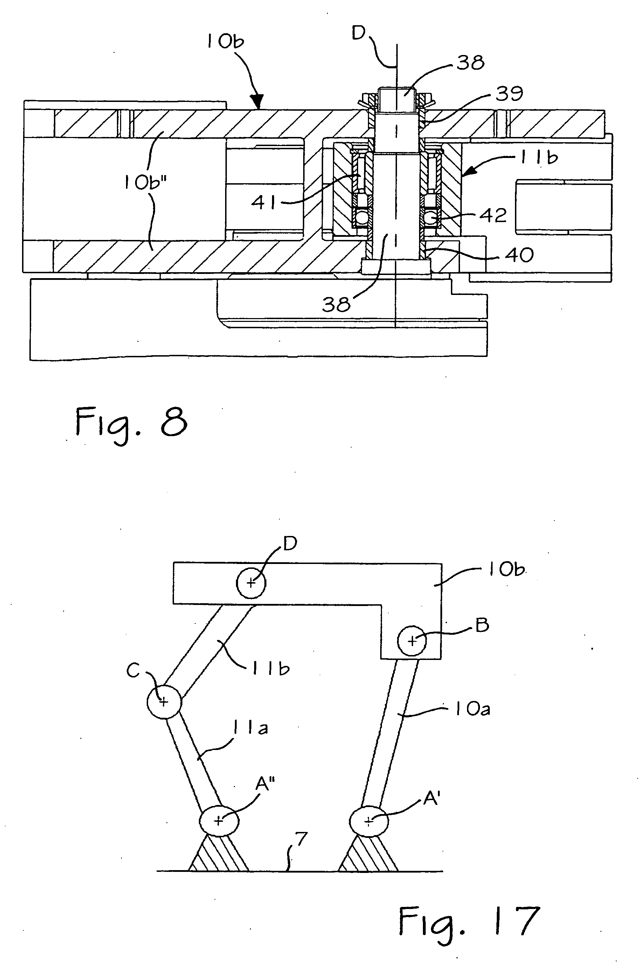

As may be seen in figure 6, the arm 10a is articulated with the mobile structure 10b through a pin 30. For this purpose, two bearings, indicated with 31 and 32, are mounted in the movable structure 10b, to rotatably support the pin 30, this latter being rigidly constrained to the first arm 10a through a keying organ 33. The bearings 31 and 32 are held in place by a cover C1 (also visible in figure 2). As may be seen in figure 7, the second arm 11a is also articulated with the third arm 11b through a pin 34. For this purpose, two bearings, indicated with 35 and 36, are mounted in the arm 11b and rotatably support the pin 34, the latter being constrained, for example by interference, to the arm 11a. The bearings 35 and 36 are held in place by covers C2 (one of which is also visible in figure 2.). In figure 8, lastly, it may be seen that the movable structure 10b and the arm 11b are also articulated one with the other through a pin 38, rigidly fixed to the structure 10b through two keying organs 39 and 40 and rotatably supported in the arm 11b through two bearings 41 and 42.

The use of bearings in all supports enables friction to be reduced. The described closed-chain kinematic structure avoids the need to mount, directly on the arms of the system, means to transmit motion (such as motors, belts, gears), so enabling the inertial loads to be reduced, to the advantage of dynamic performance.

With reference again to figure 5, cooling of the motors 15 and 18 is preferably achieved through forced air convection. The air is conveyed, for example by a fan, not shown, into an inlet 50 in the casing 15c, from where it diffuses into an annular chamber 51. Cooling air may thus flush over the stator 15b, after which, through one or more axial channels 52, it passes into an annular chamber 53, formed in the casing 18c. In this way the air may also flush over the stator 18b, after which it exits through radial openings 54.

With reference again to figure 3, the gripping head 3 comprises fingers 5 whose position can be manually adjusted in two directions orthogonal one to the other. For this purpose each finger 5 is borne by the frame 4, which is fixed by screws - not shown - onto the section bar 4a fixed to the movable structure 10b. Said screws engage first longitudinal slots 4' of the frame 4 and are screwed into nuts, not shown, that can be positioned as desired within a longitudinal cavity 4a' of the section bar 4a, to provide the possibility of longitudinal and transversal adjustment.

The relative position of the fingers 5 may also be adjusted manually. For this purpose, each finger 5 is fixed by screws 60 to the frame 4. The screws 60 engage a transversal slot 5' formed in the lower part of the finger itself and are screwed into threaded holes, not shown, present in the framework 4. As may be realised, in such a manner adjustment of the transversal position of the fingers 5 with respect to the frame 4 is also possible, and likewise of the relative position among the fingers 5.

Control of the arms 10a, 11a, 11b, with regard to the rotation movements commanded by the two motors 15 and 18, is achieved with the help of the sensors or transducers 27 and 28, which are configured to detect the positions, respectively, of the shaft 13 and of the shaft 14, and thus of the arms 10a and 11a. The sensors 27, 28 may be of any type known for the purpose, such as inductive, capacitive, magnetic or optical sensors or encoders, particularly of the incremental type.

The motors 15 and 18 are controlled, with a closed-loop logic, by a control unit of the I.S. machine, represented by the block CU in figure 5, for the purpose of managing the speed and direction of rotation of the motors themselves, on the basis of information detected through the sensors 27 and 28. The unit CU, preferably of the micro-processor type, is programmable and a user interface is associated operatively to it, represented by the block UI, for entering motor management parameters. Clearly, the unit CU and the respective interface UI make it possible to manage and control all the pusher devices provided for on the I.S. machine.

In normal operation of the pusher device 1, one or more articles P are transferred from the cooling plate 2 to the conveyor belt 1 through the movement of the structure 10b, and thus of the head 3, commanded by the motors 15 and 18 that drive the arms in accordance with the relative rules of motion.

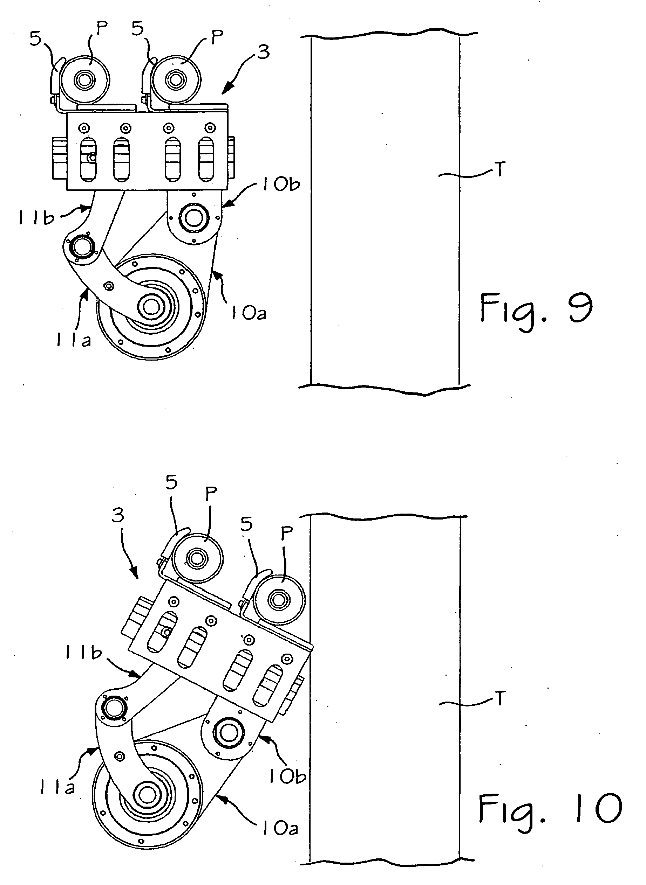

Figures 9-16 schematically illustrate a possible sequence of positions achieved by the pusher device according to the invention (in these figures the plate 2 has not been represented).

Figure 9 shows the initial position, in which the fingers 5 of the head 3 are substantially tangent to the articles P situated on the cooling plate 2.

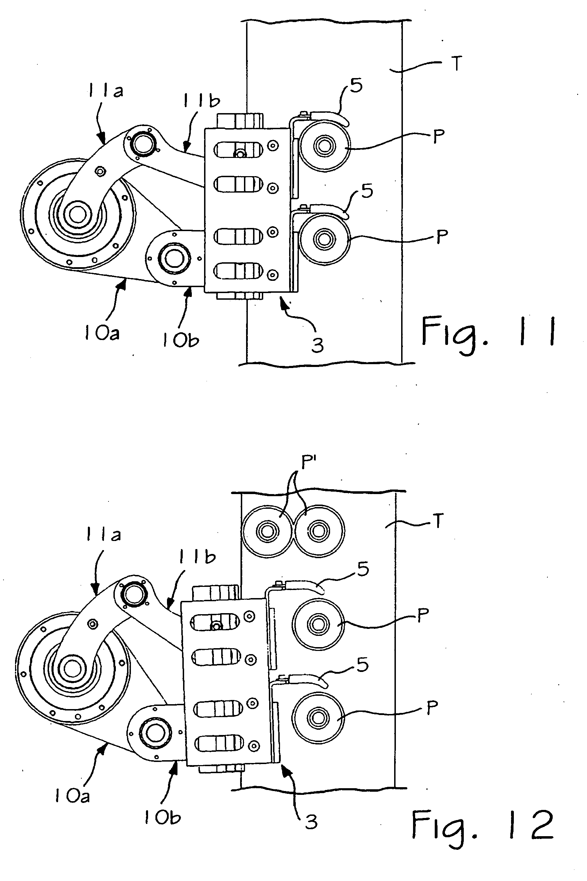

Starting from the initial position, the unit CU activates the motors 15 and 18 so as to achieve a rotation of the movable structure 10b and of the head 3 by approximately 90°, so as to bring the articles P onto the conveyor belt 1. Figure 10 illustrates an intermediate position of said rotation, whereas figure 11 illustrates the position at 90°. In the case given as an example, passage from the position of figure 9 to that of figure 11 involves a clockwise rotation - with reference to the figures - of both arms 10a, 11a. In the final phase of said rotation, it is imposed that the velocity component of articles P in the direction F is equal to the speed of the conveyor belt T, so as to enable the fingers 5 to detach from the bottles.

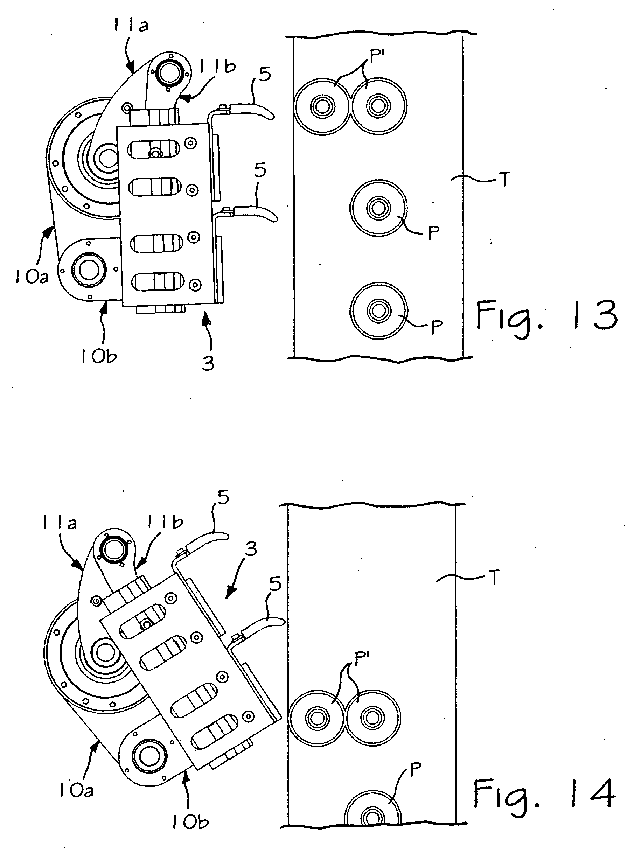

Subsequently the head 3 is displaced so as to cause a backward movement of the fingers 5 and their detachment from the articles P, avoiding collisions with either the articles P just released onto the belt 1 and the articles P' already deposited thereon by the pusher device of a section of the I.S. machine that is situated upstream of that illustrated. During this movement, whose initial phase is illustrated schematically in figure 12, a clockwise rotation is imposed to the shaft 10a and an anti-clockwise rotation is imposed to the shaft 11a, again with reference to the figures, until the mechanical linkage is brought into a retracted position, illustrated in figure 13.

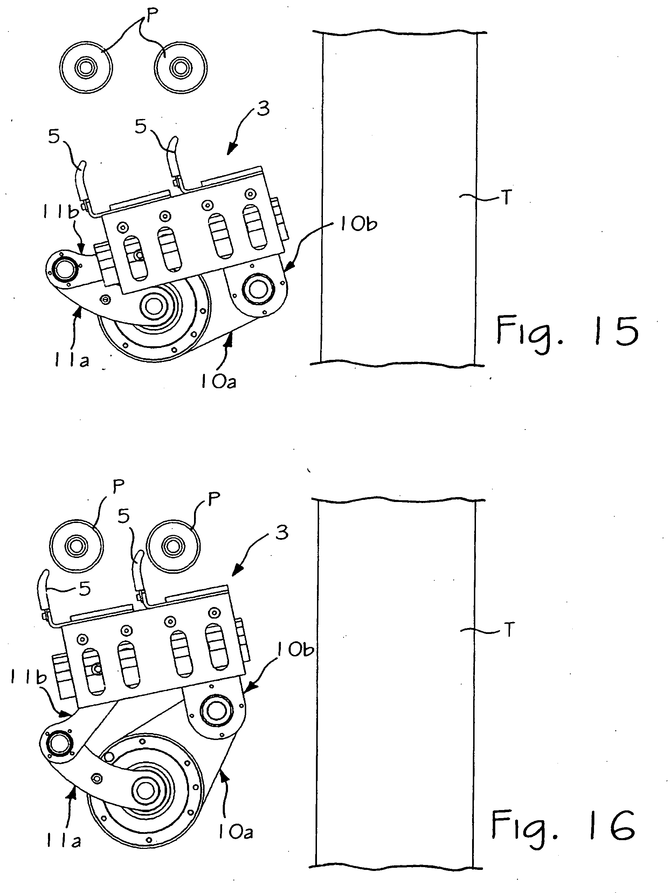

This is followed by a displacement of the head 3 towards a waiting position. In this phase, the start of which is illustrated in figure 14, an anti-clockwise rotation, with reference to the figures, is imposed to the shafts 10a, 11a. The waiting position, illustrated in figure 15, is maintained until new articles P are deposited on the cooling plate 2.

The last displacement aims to move the head 3 such that the fingers 5 engage the new articles P. The initial phase of this movement, exemplified in figure 16, involves the anti-clockwise rotation of the crank 10a and the clockwise rotation of the crank 11a, again with reference to the figures, until the initial condition of figure 9 is regained.

Regardless of the sequence illustrated above, the various displacements of the movable structure 10b, and thus of the head 3, come about under the control of the unit CU, which is programmed for this purpose using known techniques, to control the motors 15 and 18 - according to any law of velocity and/or displacement selected for the arms 10a, 11a - independently one of the other and, when necessary, in a co-ordinated manner.

From the above description it is clear that the system according to the invention is able to control by simple means the movements needed for the head 3 for engaging and disengaging with respect to the articles P. Among the advantages of the preferred embodiment of the invention described above, in particular the following stand out:
- the absolute repeatability and accuracy of the movements of the head 3, thanks to the presence of electric motors and position transducers, connected to a suitable electronic control system;
- the guaranteed precise alignment of the articles P on the axis of the conveyor belt 1 and their equal spacing;
- the possibility to program, by software, the system of movement of the head 3, in terms of trajectory, velocity of performance, directions of rotation;
- the possibility of adjusting the gripping position of the articles P by the head 3 electrically, since the starting and arrival positions of the head itself can be programmed;
- the possibility of causing the fingers 5 to detach from the articles P deposited on the belt T along a tangential trajectory, eliminating collisions both with the articles P in the release phase, and with the articles P' already present on the belt T;
- the reduced space required for the fingers 5 to enter into and leave contact with the articles P (this also enables curved fingers to be inserted even in the presence of large diameters of the articles P);
- the high rigidity and the absence of play (thanks to the lack of drive belts, chains, tangential friction coupling, etc.), with consequent motion that is without vibration (both during performance and at the end of movement), position errors, collisions, over-elongations;
- high performances, in terms of operating velocity and acceleration, also using small sized electric motors.

Obviously, without prejudice to the principle of the invention, construction details and embodiments could widely vary with respect to what has been described and shown by mere way of example, without leaving the scope of the invention as defined in the attached claims.

The control unit CU may be programmed to implement self-calibration procedures of the mechanical linkage. For this purpose, in the articulation zone corresponding to the movable axes B, C and D, appropriate rotation transducers may be provided, interfaced with the control unit CU.

In an alternative embodiment of the invention, the motors driving the mechanical linkage may obviously be in staggered positions one with regard to the other, the axes of rotation of the main arms 10a and 11a remaining coincident.

In other possible variants the axes of rotation of the main arms 10a, 10b, or of the respective driving shafts, may be parallel one with the other. A diagram of the principle in this sense is illustrated in figure 17, wherein the same reference numbers as the other figures are used to indicate elements technically equivalent to those described above. In that figure, A' and A" indicate parallel and staggered axes of rotation of the arms 10a and 10b.

## Claims

1. Pusher system for hollow glassware forming I.S.
machines, comprising at least one pusher device (1) capable of transferring one or more articles (P) from a first position (2), on one side of a conveyor (1), to a second position above said conveyor (T), wherein the pusher device (1) has a stationary structure (6, 7), a movable gripping head (3) for the articles (P) and driving means for said head (3), said driving means comprising a kinematic arrangement with articulated arms (10a, 11a, 11b) supporting said head (3), the kinematic arrangement being driven by a first and a second electric motor (15, 18), **characterised in that** said kinematic arrangement comprises:
- two main arms (10a, 11a) rotatably mounted on said stationary structure (6, 7), each main arm (10a, 11a) being driven in rotation by a respective said motor (15, 18),
- a third arm (11b) articulated to one (11a) of said main arms (10a, 11a) around a first axis (C), and
- a movable structure (10b) for supporting said head (3), articulated both to said third arm (11b) around a second axis (D) and to the other one (10a) of the main arms (10a, 10b),
wherein said main arms (10a, 11a) can rotate around a common rotation axis (A) or around respective axes of rotation (A', A') that are spaced apart and parallel to each other, said first and second axes (C, D) being parallel to each other and to the axis (A) or the axes (A', A') of rotation of said main arms (10a, 10b).

2. System according to claim 1, wherein said other main arm (10a) is articulated to said movable structure (10b) around a third axis (B), parallel to said first and second axes (C, D).

3. System according to claim 1 or claim 2, wherein said means for driving comprises a first and a second shaft (13, 14), the first shaft (13) being driven in rotation by said first motor (15) and arranged with the axis thereof coinciding with the axis of rotation (A; A') of one of said main arms (10a, 11b), the second shaft (14) being driven in rotation by said second motor (18) and arranged with the axis thereof coinciding with the axis of rotation (A; A") of the other one of said main arms (10a, 11b).

4. System according to claim 3, wherein said first shaft (13) is hollow and coaxial with said second shaft (14).

5. System according to claim 4, wherein said first and second motor (13, 14) are arranged axially one above the other, said first motor (15) having a rotor (15a) substantially coaxial with a rotor (18a) of said second motor (18).

6. System according to claim 1, wherein independent position sensors (27, 28) are provided to control rotations driven by said motors (15, 18).

7. System according to claims 3 and 6, wherein a first position sensor (27) is operatively associated to said first shaft (13) and a second sensor means (28) is operatively associated to said second shaft (14).

8. System according to claim 6 and/or 7, wherein said position sensors (27, 28) are interfaced to an electronic control unit (CU) designed to manage rotations driven by said motors (15,18), said control unit (CU) being in particular of the programmable type and having a user interface (UI) for inputting operative parameters for managing the rotations of the motors (15, 18).

9. System according to claim 8, wherein said control unit (CU) is designed to implement a self-calibration procedure of said kinematic arrangement.

10. System according to any of the preceding claims, wherein said stationary structure (6, 7) comprises a housing (15c, 18c) defining a first chamber (51), that at least partially surrounds a stator (15b) of said first motor (15), and a second chamber (53) that at least partially surrounds a stator (18b) of said second motor (18), said first chamber (51) being in fluid communication with an inlet (50) for forced cooling air and said second chamber (53) being in fluid communication with one or more outlets (54) for the cooling air, said chambers (51, 53) being in fluid communication with each other, particularly through axial passages (52) defined in said housing (15c, 18c).

## Patentansprüche

1. Abschiebevorrichtung für Glasformmaschinen I.S., umfassend zumindest eine Abschiebeeinrichtung (1), die zum Überführen von einem oder mehreren Gegenständen (P) aus einer ersten Position (2) auf einer Seite eines Förderers (1), in eine zweite Position über dem Förderer (T) in der Lage ist, wobei die Abschiebeeinrichtung (1) eine stationäre Struktur (6, 7), einen beweglichen Greifkopf (3) für die Gegenstände (P) und Antriebsmittel für den Kopf (3) aufweist, wobei die Antriebsmittel eine kinematische Anordnung mit drehbaren Armen (10a, 11a, 11b) umfasst, die den Kopf (3) unterstützen, wobei die kinematische Anordnung durch einen ersten und einen zweiten elektrischen Motor (15, 18) angetrieben wird, **dadurch gekennzeichnet, dass** die kinematische Anordnung umfasst:
- zwei Hauptarme (10a, 11a), die drehbar auf der stationären Struktur (6, 7) befestigt sind, wobei jeder Hauptarm (10a, 11a) in Rotation durch den jeweiligen Motor (15, 18) angetrieben wird,
- einen dritten Arm (11b), der drehbar auf einem (11a) der Hauptarme (10a, 11a) um eine erste Achse (C) befestigt ist, und
eine bewegliche Struktur (10b) zum Unterstützen des Kopfes (3), die sowohl den dritten Arm (11b) um die zweite Achse (D) und den anderen einen (10a) der Hauptarme (10a, 10b) drehbeweglich macht,
wobei die Hauptarme (10a, 11a) um eine gemeinsame Rotationsachse (A) oder um jeweilige Rotationsachsen (A', A') rotieren können, die voneinander beabstandet und parallel zueinander sind, wobei die ersten und zweiten Achsen (C, D) zueinander parallel sind und zu der Achse (A) oder den Achsen (A', A') der Rotation der Hauptarme (10a, 10b).

2. Vorrichtung nach Anspruch 1, bei welcher der andere Hauptarm (10a) drehbeweglich um die bewegliche Struktur (10b) um eine dritte Achse (B) parallel zu den ersten und zweiten Achsen (C, D) ist.

3. Vorrichtung nach Anspruch 1 oder 2, bei welcher die Antriebsmittel eine erste und eine zweite Welle (13, 14) umfassen, wobei die erste Welle (13) durch den ersten Motor (15) in Rotation versetzt wird und so angeordnet ist, dass seine Achse mit der Rotationsachse (A; A') von einem der Hauptarme (10a, 11b) zusammenfällt, wobei die zweite Welle (14) durch den zweiten Motor (18) in Rotation versetzt wird und so angeordnet ist, dass ihre Achse mit der Rotationsachse (A; A") des anderen der Hauptarme (10a, 11b) zusammenfällt.

4. Vorrichtung nach Anspruch 3, bei welcher die erste Welle (13) hohl ist und koaxial mit der zweiten Welle (14).

5. Vorrichtung nach Anspruch 4, bei welcher der erste und zweite Motor (13, 14) axial übereinander angeordnet sind, und bei welcher der erste Motor (15) einen Rotor (15a) aufweist, der im Wesentlichen koaxial mit einem Rotor (18a) des zweiten Motors (18) ist.

6. Vorrichtung nach Anspruch 1, bei welcher unabhängige Positionssensoren (27, 28) zur Steuerung der Rotationen bereitgestellt sind, die durch die Motoren (15, 18) angetrieben werden.

7. Vorrichtung nach Anspruch 3 und 6, bei welcher ein erster Positionssensor (27) wirksam mit der ersten Welle (13) und ein zweites Sensormittel (28) wirksam mit der zweiten Welle (14) verbunden ist.

8. Vorrichtung nach Anspruch 6 und/oder 7, bei welcher die Positionssensoren (27, 28) eine Schnittstelle mit einer elektronischen Steuereinheit (CU) bilden, die zur Regelung der Rotationen gestaltet ist, die durch die Motoren (15, 18) angetrieben werden, wobei die Steuereinheit (CU) insbesondere von der programmierbaren Art ist, und eine Nutzerschnittstelle (UI) zur Eingabe von operativen Parametern zum Regeln der Motoren (15, 18) aufweist.

9. Vorrichtung nach Anspruch 8, bei welcher die Steuereinheit (CU) zum Implementieren eines Selbstkalibrierungsablaufs der kinematischen Anordnung gestaltet ist.

10. Vorrichtung nach irgendeinem der vorhergehenden Ansprüche, bei welcher die stationäre Struktur (6, 7) ein Gehäuse (15c, 18c) umfasst, das eine erste Kammer (51) definiert, welches (welche?) zumindest teilweise einen Stator (15b) des ersten Motors (15) umgibt und eine zweite Kammer (53), die zumindest teilweise einen Stator (18b) des zweiten Motors (18) umgibt, wobei die erste Kammer (51) in Fluidkommunikation mit einem Einlass (50) für kühlende Umwälzluft steht, und die zweite Kammer (53) in Fluidkommunikation mit einem oder mehreren Auslässen (54) für die kühlende Luft steht, wobei die Kammern (51, 53) in flüssiger Kommunikation miteinander stehen, insbesondere durch axiale Durchgänge (52), die in dem Gehäuse (15c, 18c) definiert sind.

## Revendications

1. Système pousseur pour des machines I.S. de formage d'articles creux en verre, comprenant au moins un dispositif pousseur (1) capable de transférer un ou plusieurs articles (P) d'une première position (2), d'un côté d'un convoyeur (1), vers une seconde position au-dessus dudit convoyeur (T), dans lequel le dispositif pousseur (1) possède une structure fixe (6, 7), une tête de saisie mobile (3) pour les articles (P) et des moyens d'entraînement pour ladite tête, lesdits moyens d'entraînement comprenant une configuration cinématique avec des bras articulés (10a, 11a, 11b) supportant ladite tête (3), la configuration cinématique étant entraînée par un premier et un second moteurs électriques (15, 18), **caractérisé en ce que** ladite configuration cinématique comprend :
- deux bras principaux (10a, 11a) montés à rotation sur ladite structure fixe (6, 7), chaque bras principal (10a, 11a) étant entraîné en rotation par l'un respectif desdits moteurs (15, 18),
- un troisième bras (11b) articulé sur l'un (11a) desdits bras principaux (10a, 11a) autour d'un premier axe (C), et
- une structure mobile (10b) pour supporter ladite tête (3), articulée à la fois sur ledit troisième bras (11b) autour d'un second axe (D) et sur l'autre (10a) des bras principaux (10a, 10b),
dans lequel lesdits bras principaux (10a, 11a) peuvent tourner autour d'un axe de rotation commun (A) ou autour d'axes de rotation respectifs (A', A') qui sont espacés l'un de l'autre et parallèles entre eux, lesdits premier et second axes (C, D) étant parallèles l'un à l'autre et à l'axe (A) ou aux axes (A', A'), de rotation desdits bras principaux (10a, 10b).

2. Système selon la revendication 1, dans lequel ledit autre bras principal (10a) est articulé à ladite structure mobile (10b) autour d'un troisième axe (B), parallèle auxdits premier et second axes (C, D).

3. Système selon la revendication 1 ou la revendication 2, dans lequel lesdits moyens d'entraînement comprennent un premier et un second arbre (13, 14), le premier arbre (13) étant entraîné en rotation par ledit premier moteur (15) et configuré avec l'axe de celui-ci coïncidant avec l'axe de rotation (A ; A') de l'un desdits bras principaux (10a, 11b), le second arbre (14) étant entraîné en rotation par ledit second moteur (18) et configuré avec l'axe de celui-ci coïncidant avec l'axe de rotation (A ; A") de l'autre desdits bras principaux (10a, 11b).

4. Système selon la revendication 3, dans lequel ledit premier arbre (13) est creux et coaxial avec ledit second arbre (14).

5. Système selon la revendication 4, dans lequel lesdits premier et second moteurs (13, 14) sont configurés axialement l'un au-dessus de l'autre, ledit premier moteur (15) ayant un rotor (15a) substantiellement coaxial avec un rotor (18a) dudit second moteur (18).

6. Système selon la revendication 1, dans lequel des capteurs de position indépendants (27, 28) sont prévus pour contrôler les rotations entraînées par lesdits moteurs (15, 18).

7. Système selon les revendications 3 et 6, dans lequel un premier capteur de position (27) est associé de façon opérante audit premier arbre (13) et un second moyen capteur (28) est associé de manière opérante audit second arbre (14).

8. Système selon la revendication 6 et/ou 7, dans lequel lesdits capteurs de position (27, 28) sont interfacés à une unité de contrôle électronique (CU) conçue pour gérer les rotations entraînées par lesdits moteurs (15, 18), ladite unité de contrôle (CU) étant en particulier du type programmable et possédant une interface utilisateur (UI) pour introduire des paramètres opératoires pour gérer les rotations des moteurs (15, 18).

9. Système selon la revendication 8, dans lequel ladite unité de contrôle (CU) est conçue pour mettre en oeuvre une procédure d'auto-calibration de ladite configuration cinématique.

10. Système selon l'une des revendications précédentes, dans lequel ladite structure fixe (6, 7) comprend un boîtier (15c, 18c) définissant un premier volume (51), qui entoure au moins partiellement un stator (15b) dudit premier moteur (15), et un second volume (53) qui entoure au moins partiellement un stator (18b) dudit second moteur, le premier volume (51) étant en communication de fluide avec une entrée (50) pour le forçage d'air de refroidissement et ledit second volume (53) étant en communication de fluide avec une ou plusieurs sorties (54) pour l'air de refroidissement, lesdits volumes (51, 53) étant en communication de fluide l'un avec l'autre, en particulier au travers de passages axiaux (52) définis dans ledit boîtier (15c, 18c).
